(19) Europäisches Patentamt
European Patent Office
Office européen des brevets

(11) **EP 1 278 207 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(51) Int Cl.:
***G21K 1/06*** (2006.01)

(21) Anmeldenummer: **02010796.7**

(22) Anmeldetag: **15.05.2002**

(54) **Einrichtung und Verfahren zur Analyse atomarer und/oder molekularer Elemente mittels wellenlängendispersiver, röntgen-spektrometrischer Einrichtungen**

Device and method for analysing of atomic and/or molecular elements with wavelength dispersive x-ray spectrometric devices

Dispositif et méthode pour analyser des éléments atomiques et/ou moléculaires avec des appareils spectrométriques à rayons-x ayant une dispersion en longueur d'ondes

(84) Benannte Vertragsstaaten:
**DE FR GB NL**

(30) Priorität: **18.07.2001 DE 10134266**

(43) Veröffentlichungstag der Anmeldung:
**22.01.2003 Patentblatt 2003/04**

(73) Patentinhaber: **GKSS-Forschungszentrum Geesthacht GmbH 21502 Geesthacht (DE)**

(72) Erfinder:
• **Michaelsen, Carsten, Dr. 21502 Geesthacht (DE)**
• **Bormann, Rüdiger, Prof. 21224 Rosengarten (DE)**
• **Wiesmann, Jörg 21335 Lüneburg (DE)**

(74) Vertreter: **UEXKÜLL & STOLBERG Patentanwälte Beselerstraße 4 22607 Hamburg (DE)**

(56) Entgegenhaltungen:
**US-A- 4 675 889     US-A- 5 216 539 US-A- 5 485 499**

• **AOUADI M S ET AL: "CHARACTERIZATION OF SPUTTER DEPOSITED INCONEL/CARBON X-RAY MULTILAYERS" JOURNAL OF VACUUM SCIENCE AND TECHNOLOGY: PART A, AMERICAN INSTITUTE OF PHYSICS. NEW YORK, US, Bd. 11, Nr. 1, 1993, Seiten 115-124, XP000345532 ISSN: 0734-2101**

EP 1 278 207 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Beschreibung

Die Erfindung betrifft eine Einrichtung zur Analyse atomarer und/oder molekularer Elemente mittels wellenlängendispersiver, röntgenspektrometrischer Einrichtungen, umfassend wenigstens eine eine Multilayerschicht aufweisende Spiegel- oder Fokussierungseinrichtung, insbesondere bei einer solchen Einrichtung, bei der von einer zu analysierenden Probe durch einfallende primäre Röntgenstrahlen oder Elektronenstrahlen induzierte Fluoreszenzstrahlen vor Auftreffen auf einem Meß- oder Analysedetektor auf die Spiegel- oder Fokussierungseinrichtung geleitet wird, wobei die Multilayerschicht durch wenigstens ein Schichtenpaar gebildet wird und wobei ein erstes Schichtelement des Schichtenpaares durch Kohlenstoff oder Scandium gebildet wird, sowie ein derartiges Verfahren.

Einrichtungen und Verfahren der eingangs genannten Art, die beispielsweise aus der DE-OS 199 26 056 bekannt sind, werden in der wissenschaftlichen Analytik aber auch im Bereich der industriellen Anwendung zum Nachweis atomar und/oder molekular vorliegender Elemente in den verschiedensten Anwendungsbereichen verwendet, z.B wenn es darauf ankommt, eben in einer zu untersuchenden bzw. zu analysierenden Probe in geringsten Mengen vorliegende Verunreinigungen oder auch Störungen in Proben zu analysieren bzw. nachzuweisen.

Dabei werden beispielsweise von einer Röntgen- oder Elektronenstrahlenquelle an sich beliebiger Art Röntgenoder Elektronenstrahlen auf eine Probe geleitet, wodurch als Teil der von der Probe dann reflektierten Strahlen Fluoreszenzstrahlen emittiert werden, die durch die einfallenden primären Röntgenstrahlen aufgrund an sich bekannter physikalischer Vorgänge induziert werden. Diese Fluoreszenzstrahlen werden vor dem Auftreffen auf eine Meß- oder Analyseanordnung, beispielsweise in Form eines fluoreszenzstrahlenselektiven Detektors zunächst auf einen geeignet ausgewählten Kristall gegeben, dort reflektiert und dann auf den Meß- oder Analysedetektor geführt. Diese Kristalle wirken als Analysatoren. Diese Kristalle, die künstlich hergestellt werden können, können aus dünnen, sich mehrfach regelmäßig abwechselnden Schichten zweier oder mehrerer Werkstoffe mit unterschiedlichen röntgenoptischen Eigenschaften bestehen. Daran werden, um in dem vorangehend aufgeführten Beispiel zu bleiben, die einfallenden Fluoreszenzstrahlen reflektiert, aber nur derjenige Anteil, für den die Bragg'sche Gleichung

$$n \lambda = 2d \sin \theta$$

erfüllt ist. Hierbei ist

$$\lambda \, (nm) = \frac{1,24}{E(keV)},$$

wobei n eine natürliche Zahl (n = 1, 2, 3, 4 ...), $\lambda$ die Wellenlänge des Röntgenlichtes, d die Periodizität (Gitterkonstante) des Analysatorkristalls, $2\theta$ der Beugungswinkel und E die Energie der Röntgenstrahlen ist. Eine Berücksichtigung des Effekts der Brechung, der für Röntgenstrahlen sehr klein ist, führt zu einer gegenüber der zuerst genannten modifizierten Gleichung, wobei sich aus den eingestellten Winkeln $\theta$ und der Gitterkonstante d des Analysators nach der ersten Gleichung bzw. deren Modifikation die Wellenlänge der reflektierten Röntgenstrahlen ergibt. Durch Variation des Winkels kann also die Wellenlänge der reflektierten Strahlen, im obigen Beispiels der Fluoreszenzstrahlen, in kontrollierter Weise ausgewählt werden.

Der große Vorteil der künstlichen Kristalle aus vielen sich regelmäßig abwechselnden Schichten, man spricht in diesem Zusammenhang auch von sogenannten Multilayerschichten, ist, daß man die Werkstoffe der Vielfachschicht hinsichtlich bestmöglicher Funktion auswählen und optimieren kann. Dieses ist ein wesentlicher Vorteil der künstlich hergestellten Multilayerschicht gegenüber natürlichen Kristallen.

Die Intensität der reflektierten Strahlung ist maßgeblich von den in der Multilayerschicht verwendeten Werkstoffen abhängig. Zusätzlich können die Gitterkonstanten der Multilayerschicht in weiteren Grenzen variiert werden als es in natürlichen Kristallen der Fall ist.

Ein besonderer Vorteil der als Analysatoren wirkenden Multilayerschicht ist der, daß damit die Analyse leichter Elemente bei gleichbleibender Intensität und ohne gesundheitsgefährdende Nebenwirkungen möglich ist.

Man hat bisher in vielen Fällen für speziell zu analysierende Elemente die Ausbildung der Multilayerschicht bzw. die einzelnen Schichten der Multilayerschicht auf das atomar bzw. molekular in einer zu untersuchenden Probe zu erwartende Element abgestimmt bzw. abgestellt.

Generell besteht bei Röntgenfluoreszenzspektrometern das Problem, daß deren Effektivität im weichen Röntgenbereich für viele Untersuchungen nicht ausreichend ist. Man bediente sich bisher gattungsgemäßer Multilayerschichten, bei denen ein Schichtelement eines Multilayerschichtpaares aus Vanadium bestand und das andere Schichtelement aus Kohlenstoff, oder, bei denen das erste Schichtelement aus Eisen und das zweite Schichtelement aus Scandium bestand. Es zeigt sich bei den bekannten Multilayerschichten, daß die Ausbeute und die Effizienz von Röntgenfluoreszenzspektrometern im besagten weichen Röntgenbereich sehr gering ist, wobei für die wissenschaftliche und wirtschaftliche Nutzung der Röntgenfluoreszenzspektrometer schon eine geringe Steigerung der Reflexivität der Multilayerschicht von entscheidender Bedeutung sein kann und auch marktbestimmend sein kann. Ein weiterer Nachteil der bekannten Röntgenfluoreszenzspektrometer bzw. Multilayerschichten, die in diesem Zusammenhang eingesetzt werden, besteht darin, daß die bekannten Multilayerschichten für den weichen Röntgenbereich stark zur Interdiffusion neigen und somit nicht stabil sind und zudem auch noch schwer herstellbar sind.

Die US-4 675 889 offenbart eine gattungsgemäße Einrichtung.

Es ist somit Aufgabe der vorliegenden Erfindung, eine Einrichtung und ein Verfahren zu schaffen, mit denen eine sehr stark verbesserte Röntgenanalyse für den Nachweis von Kohlenstoff und Stickstoff möglich ist, wobei sowohl die Einrichtung als auch das Verfahren mit an sich im Stand der Technik bekannten Mitteln auf einfache Weise aufgebaut und betrieben werden kann, so daß bisherige Analyseeinrichtungen und bisherige Verfahren an sich in den Grundzügen beibehalten werden können und die Einrichtung und das Verfahren sowohl bei forschenden als auch industriellen Einrichtungen auf einfache Weise kostengünstig herstellbar und auf einfache Weise kostengünstig betreibbar sein sollen.

Gelöst wird die Aufgabe gemäß der erfindungsgemäßen Einrichtung nach Anspruch 1 dadurch, daß eine gattungsgemäße Einrichtung derart weitergebildet wird, daß das Schichtelement des Schichtenpaares durch Titanoxid oder Vanadiumoxid gebildet wird.

Der Vorteil der erfindungsgemäßen Lösung besteht im wesentlichen darin, daß mittels der erfindungsgemäßen Lösung es möglich ist, die Reflektivität in Bezug auf weiche Röntgenstrahlen des Multilayerspiegels bzw. der Multilayerschicht schlechthin, signifikant gegenüber dem zu steigern, was bisher im Stand der Technik als möglich gehalten wurde. Die mittels der erfindungsgemäßen Lösung erhaltene reale Reflektivitätssteigerung ist auch für die Fachwelt ein völlig überraschendes Ergebnis und stand selbst zu den Vorstellungen der Fachwelt in einem Widerspruch zu dem, was vorhergesagt wurde. Der wissenschaftliche Erklärungsversuch für die tatsächlich mittels der erfindungsgemäßen Lösung erreichten signifikanten Steigerung der Reflektivität ergibt sich möglicherweise aufgrund der durch die Absorptionskanten verursachten Effekte sowie der anomalen Dispersion der lösungsgemäß verwendeten Materialien.

Ein weiterer wesentlicher Vorteil der erfindungsgemäßen Lösung ergibt sich auch für den eigentlichen Untersuchungsvorgang mit den lösungsgemäß ausgebildeten Multilayerschichten, denn es ergeben sich dadurch schmale Reflexe, die zu einer signifikant verbesserten Auflösung und zu einem signifikant verbesserten Signal-Untergrundverhältnis führen.

Insbesondere für den Nachweis von Kohlenstoff hat es sich als sehr vorteilhaft herausgestellt, daß Metalloxid des zweiten Elements des Schichtenpaares durch Titanoxid zu bilden, wobei derart ausgebildete Multilayerspiegel eine sehr gute thermische Stabilität zeigten und eine gegenüber bisherigen Multilayerschichten zum Nachweis von Kohlenstoff eine bessere Herstellbarkeit.

Insbesondere für den Nachweis von Stickstoff hat es sich als vorteilhaft herausgestellt, daß das Metalloxid des zweiten Elements des Schichtenpaares durch Vanadiumoxid gebildet wird, wobei auch hier eine bessere thermische Stabilität erreicht wird gegenüber bekannten Multilayerschichten zum Nachweis von Stickstoff und ebenfalls eine gegenüber bisherigen Herstellungsmethoden für die Multilayerspiegel eine verbesserte Herstellbarkeit.

Gem. einer weiteren vorteilhaften anderen Ausgestaltung der Einrichtung kann zwischen den Schichtelementen des Schichtenpaares eine eine Reaktion der das Schichtenpaar bildenden Schichtelemente untereinander verhindernde Schicht angeordnet sein. An den Grenzflächen zwischen Kohlenstoff bzw. Scandium und dem Metalloxid bzw. dem Metallnitrid kann es vorkommen, daß die Schichten des Multilayerspiegels miteinander reagieren, was zu einer Zerstörung bzw. einem Unbrauchbarwerden der Multilayerschicht bzw. eines derart aufgebauten Multilayerspiegels insgesamt führt. Mit dieser reaktionsverhindernden Schicht, die vorzugsweise aus Wolfram besteht, kann die unerwünschte Reaktion der aneinandergrenzenden Multilayerschichten bzw. der Schichtelemente eines jeden Multilayerschichtpaares verhindert werden.

Gemäß einer vorteilhaften Ausgestaltung der Einrichtung besteht die Multilayerschicht aus einer Anzahl von 1 bis 100 Schichtpaaren, d.h. aus 2 bis 200 Einzelschichten. Die Anzahl der Schichten bzw. Schichtpaare, die zur Ausbildung einer bestimmten Multilayerschicht gewählt wird, richtet sich im wesentlichen nach der zu lösenden Analyse bzw. Meßaufgabe und der in der zu untersuchenden Probe zu erwartenden Art und Menge der Verunreinigung.

Besonders vorteilhaft ist es, die Multilayerschicht derart aufzubauen, daß sie aus einer Anzahl von 40 bis 50 Schichtpaaren besteht, d.h. aus 80 bis 100 einzelnen Schichten.

Bei einer Grundversion der Einrichtung ist die Dicke der jeweiligen Multilayerschicht konstant, wobei es dabei aber auch möglich ist, die Dicke einer Schicht jedes Multilayerpaares gegenüber der anderen Schicht desselben Multilayerpaares unterschiedlich dick auszubilden.

Grundsätzlich wird bei den vorangehend dargestellten Ausführungsbeispielen gewährleistet, daß ein paralleler Fluoreszenzstrahl an der gesamten Fläche der Multilayerschicht mit maximaler Intensität reflektiert wird.

Bei einer noch anderen vorteilhaften Ausgestaltung der Einrichtung variiert die Dicke der jeweiligen Multilayerschicht über die Fläche, womit gewährleistet werden kann, daß nicht parallele Fluoreszenzstrahlen, die unter unterschiedlichen Winkeln auf die Multilayerschicht fallen, für die gewünschte Wellenlänge über die gesamte Fläche der Multilayerschicht mit maximaler Intensität reflektiert werden. Die Variation des Einfallswinkels θ wird hierbei, entsprechend der eingangs genannten ersten Gleichung oder deren berechnungskorrigierter Modifikation, durch eine Variation der Gitterkonstanten d kompensiert, so daß λ konstant bleibt.

Vorteilhafterweise ist die Einrichtung dahingehend modifiziert, daß die Multilayerschicht gekrümmt ist oder bei einer noch anderen vorteilhaften Ausgestaltung, daß die Multilayerschicht auf einem flächigen Träger (Substrat) angeordnet ist, was aber bei allen Ausgestaltungen der Multilayerschicht möglich ist. Hierdurch wird gewährleistet, daß ein nicht paralleles Fluoreszenzstrahlenbündel, das an verschiedenen Positionen unter unterschiedlichen Winkeln auf die Multilayerschicht trifft, in seiner Strahlform beeinflußt werden kann, so daß beispielsweise ein auf die Multilayerschicht einfallendes divergentes Fluoreszenzstrahlenbündel in ein paralleles oder auch ein fokussiertes Fluoreszenzstrahlenbündel umgeformt werden kann. Auch kann es vorteilhaft sein, die Dicke der einzelnen Schichten der Multilayerschicht selbst wiederum unterschiedlich auszubilden, d.h. über die Fläche der Multilayerschicht in geeigneter Weise zu variieren, so daß die Multilayerschicht die gewünschte Wellenlänge der Fluoreszenzstrahlen des unter unterschiedlichen Winkeln auftreffenden Strahlenbündels über die gesamte Fläche mit maximaler Intensität reflektiert.

Es sind auch solche Kombinationen bei der Multilayerschicht denkbar, bei denen die eine Schicht des Multilayerpaares über die Fläche konstant dick ist, wohingegen die andere Schicht des Schichtpaares über die Fläche ihrer Dicke variiert.

Vorzugsweise liegt schließlich die Dicke der Schicht im Bereich von 1 bis 20 nm. Untersuchungen haben ergeben, daß bei derartigen Schichtdicken ein Höchstmaß an Reflektivität und Auflösungsvermögen mittels der Multilayerschicht erreicht werden kann.

Ein Verfahren zur Analyse atomarer und/oder molekularer Elemente mittels wellenlängendispersiver, röntgenspektroskopischer Einrichtungen, umfassend wenigstens eine eine Multilayerschicht aufweisende Spiegel- oder Fokussierungseinrichtung, auf die primäre Röntgenstrahlung oder Fluoreszenzstrahlen geleitet werden, insbesondere derart, bei dem von einer zu analysierenden Probe durch einfallende primäre Röntgen- oder Elektronenstrahlen induzierte Fluoreszenzstrahlen vor Auftreffen auf einem Meß- oder Analysedetektor auf die Spiegel- oder Fokussierungseinrichtung geleitet werden, wobei die primären Röntgenstrahlen oder die Fluoreszenzstrahlen auf die aus wenigstens einem Schichtenpaar gebildeten Multilayerschicht geleitet werden und wobei ein erstes Schichtelement des Schichtpaares durch Kohlenstoff oder Scandium gebildet wird, ist dadurch gekennzeichnet, daß das zweite Schichtelement des Schichtpaares durch ein Titanoxid oder Vanadiumoxid gebildet wird.

Mittels des Verfahrens ist es möglich, für die Kohlenstoff- bzw. Stickstofflinie bei 277 bzw. 392 eV eine Reflektivität von über 51 % bzw. 48 % in der ersten Bragg-Ordnung zu erreichen. Dieses ist signifikant höher als bei den besten zur Zeit betriebenen Verfahren, bei denen Multilayerschichten als Analysatoren eingesetzt werden.

Tabelle 1: Reflektivitäten verschiedener Schichtenpaare für die Kohlenstoffliniek, mit den Parametern Paarschichtdicke d = 6 nm, 100 Paare, Rauhigkeit = 0,Schichtdickenverhältnis = 1-d Kohlenstoff/d = 0.4

| Material | Reflektivität bei 277 eV (%) |
|---|---|
| V-C | 41.3 |
| VC-C | 40.6 |
| VN-C | 48.7 |
| VO-C | 48.5 |
| Ti-C | 39.2 |
| TiC-C | 39.8 |
| TiN-C | 49.4 |
| TiO$_2$-C | 51.2 |

Tabelle 2: Reflektivitäten verschiedener Schichtenpaare füßr die Stickstofflinie, mit den Parameters Paarschichtdicke d = 5.5 nm, 100 Paare, Rauhigkeit = 0,Schichtdickenverhältnis = 1-d Scandium/d = 0.4

| Material | Reflektivität bei 392 eV (%) |
|---|---|
| Fe-Sc | 45.5 |
| VN-Sc | 45.8 |
| VO-Sc | 48.8 |
| TiN-Sc | 40.8 |
| TiO$_2$-Sc | 47.2 |

Im übrigen gelten für das Verfahren genau die Vorteile wie für die erfindungsgemäße Einrichtung angegeben, wobei auf diese obigen Vorteilsangaben bezug genommen wird.

Die Erfindung wird nun unter Bezugnahme auf die nachfolgenden schematischen Zeichnungen anhand eines Ausführungsbeispieles im einzelnen beschrieben. Darin zeigen:

Fig. 1    den von einer Röntgenstrahlenquelle ausgehenden Strahlenverlauf auf eine Probe, von dort auf zwei Multilayerspiegel und von dort auf eine Meß- oder Analyseeinrichtung (Detektor), und

Fig. 2    den Verlauf der einfallenden und reflektierten Strahlen (hier im Beispiel Fluoreszenzstrahlen) auf die Multilayerschicht der erfindungsgemäßen Einrichtung, die auf einem Träger/Substrat aufgebracht ist.

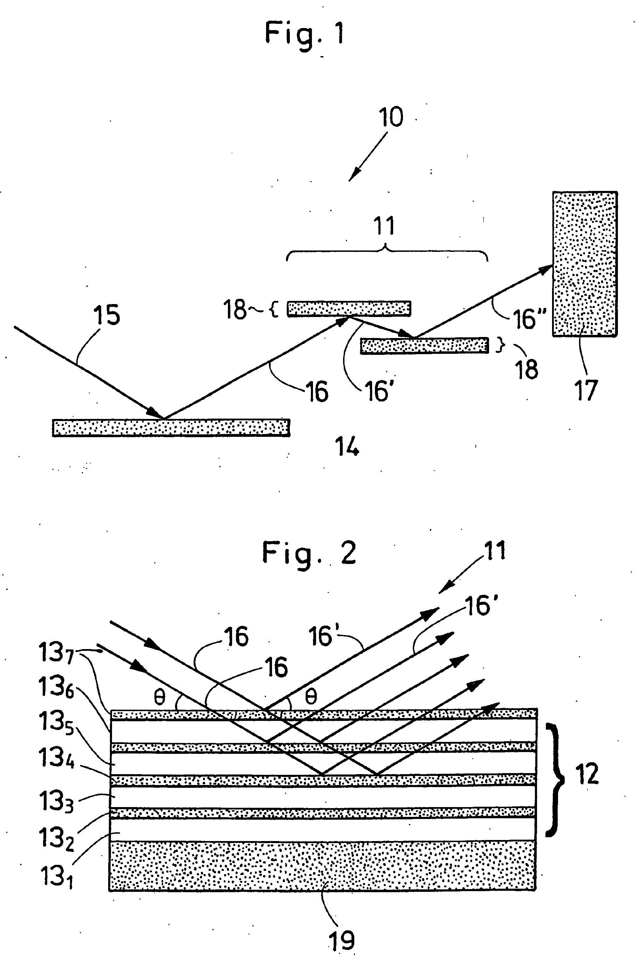

Es wird zunächst Bezug genommen auf die Darstellung von Fig. 1, die schematisch eine Einrichtung 10 zur Analyse atomarer und/oder molekularer Elemente zeigt, wie sie erfindungsgemäß beispielhaft realisiert und in vielen Anwendungsbereichen mit geringfügigen Abweichungen Anwendung findet.

Von einer hier nicht dargestellten Röntgenoder Elektronenquelle werden primäre Röntgenstrahlen oder Elektronenstrahlen 15 abgegeben, die auf eine Probe 14 fallen, beispielsweise in Form eines Siliziumwafers, um Verunreinigungen im Siliziumwafer im Bereich der Oberfläche und im oberflächennahen Bereich nachzuweisen bzw. zu untersuchen. Aufgrund bekannter physikalischer Vorgänge werden Fluoreszenzstrahlen 16 als reflektierte Strahlen erzeugt, die in ihrem Strahlungskontinuum Informationen über die Art der im Siliumwafer bzw. der Probe 14 enthaltenen zusätzlichen atomaren und/oder molekularen Elemente enthalten. Die Fluoreszenzstrahlen 16 werden auf eine Spiegel- oder Fokussierungseinrichtung 11 gegeben, die im Beispiel von Fig. 1 aus zwei durch jeweils eine Multilayerschicht 12 gebildete Spiegel- oder Fokussierungseinrichtungen 11 gebildet wird, die aber auch bei einer anderen Ausgestaltung der Einrichtung 10 nur aus einer Spiegel- oder Fokussierungseinrichtung 11 bestehen kann. Die von der Spiegeloder Fokussierungseinrichtung 11 reflektierten Fluoreszenzstrahlen 16' bzw. 16'' werden auf eine Meß- oder Analyseanordnung (Detektor) 17 gegeben, mittels der auf an sich bekannte Weise quantitative und qualitative Aussagen über die Art der auf der Probe 14 anzutreffenden atomaren und/oder molekularen Elemente erfolgen können, die auf dem bzw. in dem die Probe 14 bildenden Werkstoff enthalten sein können.

In Fig. 2 ist beispielhaft ein Ausschnitt aus der Spiegel- oder Fokussierungseinrichtung 11 dargestellt, die die eigentliche Multilayerschicht 12, hier aufgebracht auf einem Träger bzw. Substrat 19, darstellt.

Die einzelnen Schichten $13_{1...n}$ bilden durch die Menge aller Paare $13_1$; $13_2$, $13_3$; $13_4$, $13_5$; $13_6$ usw. die Gesamtmultilayerschicht 12. Jede der Schichten pro Schichtenpaar wird aus einer Kohlenstoffschicht oder einer Scandiumschicht (erstes Schichtelement) und einer Metalloxidschicht oder einer Metallnitridschicht (zweites Schichtelement) gebildet. Der einfallende Strahl, hier im Beispiel Fluoreszenzstrahlung 16 wird an jeder Grenzfläche eines Schichtenpaares reflektiert und verläßt als reflektierte Strahlen 16' die Spiegel- oder Fokussierungseinrichtung 11 und gelangt von dort entweder auf eine zweite Spiegel- oder Fokussierungseinrichtung 11, vergleiche Fig. 1 und von dort auf die Meßoder Analyseeinrichtung 17, oder aber ohne nochmalige Reflexion an einer Spiegel- oder Fokussierungseinrichtung 11 direkt auf die Meß- und Analyseanordnung 17.

Bezugszeichenliste

| 10 | Einrichtung |
| 11 | Spiegel- oder Fokussierungseinrichtung |
| 12 | Multilayerschicht |
| 13 | (einzelne) Schicht |
| 14 | Probe |
| 15 | primäre (einfallende) Röntgenstrahlen |
| 16 | Fluoreszenzstrahlen |
| 17 | Meß- oder Analyseanordnung (Detektor) |
| 18 | Schichtdicke |
| 19 | Träger/Substrat |

**Patentansprüche**

1. Einrichtung zur Analyse atomarer und/oder molekularer Elemente mittels wellenlängendispersiver, röntgenspektrometrischer Einrichtungen, umfassend wenigstens eine eine Multilayerschicht aufweisende Spiegel- oder Fokussierungseinrichtung, insbesondere für ein Verfahren, bei dem von einer zu analysierenden Probe durch einfallende primäre Röntgen- oder Elektronenstrahlen induzierte Fluoreszenzstrahlung vor Auftreffen auf einem Meß- oder Analysedetektor auf die Spiegel- oder Fokussierungseinrichtung geleitet wird, wobei die Multilayerschicht (12) durch wenigstens ein Schichtenpaar gebildet ist und wobei ein erstes Schichtelement des Schichtenpaares durch Kohlenstoff oder Scandium gebildet ist, **dadurch gekennzeichnet, daß** das zweite Schichtelement ($13_2$) des Schichtenpaares ($13_1$, $13_2$) durch Titanoxid oder Vanadiumoxid gebildet ist.

2. Einrichtung nach Anspruch 1, **dadurch gekennzeichnet, daß** zwischen den Schichtelementen ($13_1$, $13_2$) des Schichtenpaares ($13_1$, $13_2$) eine Reaktion der das Schichtenpaar ($13_1$, $13_2$) bildenden Schichtenelemente untereinander verhindernde Schicht ($13_1$, $13_2$) angeordnet ist.

3. Einrichtung nach Anspruch 2, **dadurch gekennzeichnet, daß** die reaktionsverhindernde Schicht, aus Wolfram besteht.

4. Einrichtung nach einem oder mehreren der Ansprüche 1 bis 3, **dadurch gekennzeichnet, daß** die Dicke eines Schichtenpaares ($13_1$, $13_2$) einen Bereich von 1 bis 20 nm aufweist.

5. Einrichtung nach Anspruch 4, **dadurch gekennzeichnet, daß** die Dicke des Schichtenpaares ($13_1$, $13_2$) bei etwa 6 nm liegt.

6. Einrichtung nach einem oder mehreren der Ansprüche 1 bis 5, **dadurch gekennzeichnet, daß** die Multilayerschicht (12) aus einer Anzahl von 1 bis 100 Schichtpaaren ($13_1$, $13_2$) besteht.

7. Einrichtung nach Anspruch 6, **dadurch gekennzeichnet, daß** die Multilayerschicht (12) aus einer Anzahl von 40 - 50 Schichtpaaren ($13_1$, $13_2$) besteht.

## Claims

1. Apparatus for the analysis of atomic and/or molecular elements by wavelengths dispersive X-ray spectrometric devices comprising at least a mirror or focusing device including a multilayer structure, in particular for a method in which fluorescence radiation emanating from a sample to be tested by exposure to primary X-ray or electron radiation is directed to the mirror or focusing device before impinging a measuring or analysis detector, wherein said multilayer structure (12) comprises at least one layer pair and wherein a first layer element of the layer pair is formed by carbon or scandium, **characterized in that** the second layer element ($13_2$) of the layer pair ($13_1$, $13_2$) is formed by titanium oxide or vanadium oxide.

2. Apparatus according to claim 1, **characterized in that** a layer ($13_1$, $13_2$) is disposed between said layer elements ($13_1$, $13_2$) of the layer pair ($13_1$, $13_2$), which prevents reactions between the layer elements forming the layer pair ($13_1$, $13_2$).

3. Apparatus according to claim 2, **characterized in that** said reaction preventing layer consists of tungsten.

4. Apparatus according to any of claims 1 to 3, **characterized in that** the thickness of a layer pair ($13_1$, $13_2$) has a range of 1 to 20 nm.

5. Apparatus according to claim 4, **characterized in that** the layer pair ($13_1$, $13_2$) has a thickness of about 6 nm.

6. Apparatus according to any of claims 1 to 5, **characterized in that** the multilayer structure (12) consists of a number of 1 to 100 layer pairs ($13_1$, $13_2$) .

7. Apparatus according to claim 6, **characterized in that** the multilayer structure (12) consists of a number of 40 to 50 layer pairs ($13_1$, $13_2$) .

## Revendications

1. Dispositif pour l'analyse d'éléments atomiques et/ou moléculaire au moyen d'appareils spectrométriques à rayons X ayant une dispersion en longueur d'onde, comprenant au moins un dispositif à miroir ou de focalisation comportant un revêtement multicouche, en particulier pour un procédé dans lequel, avant l'incidence sur un détecteur de mesure ou d'analyse, un rayonnement fluorescent induit par des rayons X ou des faisceaux d'électrons incidents est acheminé d'un échantillon à analyser sur le dispositif à miroir ou de focalisation, le revêtement multicouche (12) étant formé par au moins une paire de couches, et un premier élément de couche de la paire de couches étant formé par du carbone ou du scandium, **caractérisé en ce que** le deuxième élément de couche ($13_2$) de la paire de couches ($13_1$, $13_2$) est formé par de l'oxyde de titane ou de l'oxyde de vanadium.

2. Dispositif selon la revendication 1, **caractérisé en ce qu'**entre les éléments de couches ($13_1$, $13_2$) de la paire de couches ($13_1$, $13_2$) est disposée une couche ($13_1$, $13_2$) empêchant une réaction, entre eux, des éléments de couche formant la paire de couches ($13_1$, $13_2$).

3. Dispositif selon la revendication 2, **caractérisé en ce que** la couche empêchant une réaction consiste en tungstène.

4. Dispositif selon l'une quelconque ou plusieurs des revendications 1 à 3, **caractérisé en ce que** l'épaisseur d'une paire de couches ($13_1$, $13_2$) présente un intervalle de 1 à 20 nm.

5. Dispositif selon la revendication 4, **caractérisé en ce que** l'épaisseur de la paire de couches ($13_1$, $13_2$) est voisine de 6 nm environ.

6. Dispositif selon l'une quelconque ou plusieurs des revendications 1 à 5, **caractérisé en ce que** le revêtement multicouche (12) consiste en un nombre de 1 à 100 paires de couches ($13_1$, $13_2$).

7. Dispositif selon la revendication 6, **caractérisé en ce que** le revêtement multicouche (12) consiste en un nombre de 40 à 50 paires de couches ($13_1$, $13_{2}$).

# Fig. 1

# Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19926056 A
- US 4675889 A